# EUROPEAN PATENT APPLICATION

(11) **EP 1 836 928 A2**
(43) Date of publication of application: **26.09.2007**
(21) Application number: 07075217.5
(22) Date of filing: 21.03.2007
(51) Int. Cl.: A47B 31/02

(54) **System with refrigerated food trolleys**

(30) Priority: 21.03.2006 NL 1031423
(71) Applicant: LANGELAAR, Hendrik, 2411 KC Bodegraven (NL)
(72) Inventor: LANGELAAR, Hendrik, 2411 KC Bodegraven (NL)
(74) Representative: Brookhuis, Hendrik Jan Arnold

(57) **Abstract**

System for the refrigerated storage and distribution of food with one or more refrigerated food distribution trolleys. The system contains a cooling air supply device in order to provide a cool air flow. Furthermore the system contains one or more food distribution trolleys with an inner space for storing one or more trays of food to be distributed inside, the trolley of which can support one or more trays in a serving position on the upper side of the inner space, in such a way that food can be ladled out from one or more trays from the upper side, in which, preferably within the inner space, supports are mounted which, below the serving position, can store several food-filled trays.

The food distribution trolley is equipped with a transfer opening for cooling air for the inflow of cooling air to the inner space. To the transfer opening for cooling air there is a detachable coupling for the connection of the cooling air supply device to the food trolley.

The food distribution trolley is furthermore equipped with at least on outlet opening for cooling air via which cooling air can flow from the inner space. The outlet opening for cooling air is placed higher than the transfer opening for cooling air, so that within the inner space an upward flow of cooling air takes place during operation of the system, preferably during the distribution of a trolley placed in the serving position.

## Description

The invention concerns a system for the refrigerated storage and serving or distribution of pre-prepared food from one or more refrigerated food trolleys.

Food trolleys are known, among other things, embodied as food distribution trolleys that are especially used in places where large numbers of people have to be served food, for example, in large canteens. In general such trolleys can be moved manually. At the point of distribution, often in a room specifically designed for that, the trolleys are usually placed in a predefined arrangement so that the distribution can then take place. In each trolley there are one or more open trays, for example with dimensions in accordance with the Gastronorm standard, in which the food is kept, so that the food can be taken easily from the trays that are accessible from above, for example, on a plate on a meal tray.

The meal tray can then be moved along the arrangement by the person who takes the meal, or directly be handed over to that person. In many situations, such as hospitals, nursing homes, etc. the meal trays are filled by the kitchen staff and placed in movable tray trolleys. Those tray trolleys normally have at one or both sides an opening that can be closed by one or more (sliding) doors, with a rack in which at several levels, and often in columns next to each other, the filled trays can be placed.

There are also food trolleys that are designed for receiving one or more wire baskets or similar, that are permeable to cooling air, in which containers with prepared food such as for example soup, desserts, etc. is placed. On the meal tray a container can be placed that is picked out of the wire basket from above, through an opening in the upper part of the food trolley.

Refrigeration and hygiene are important aspects for such applications. Previously prepared food products should for instance be stored properly in order to prevent decay and quality loss. This means that adequate refrigeration is required. Also during the distribution it is desirable that the food in the trays from which it is ladled is sufficiently refrigerated.

As far as hygiene concerns it is noted that such trolleys are cleaned preferably after each use, both on the inside and the outside.

Well-known systems with food trolleys, especially food distribution trolleys, are in practice not satisfying.

One objective of the invention is therefore to provide for a system that refrigerates one or more food trolleys, especially during the storage prior to the serving or distribution of the food, and also during the serving or distribution of the food.

Another objective of the invention is to provide for a system that is practical in use, also by non-skilled staff. One aspect at that is that during the distribution the trays in a trolley, or the wire baskets with food containers, can become empty, so that new supply is need. The invention intends to provide for a system that enables to resolve this situation quickly, without the relevant efforts of the staff, namely by replacing an empty trolley in full by a full trolley.

Another objective of the invention is to provide for a food trolley at which a correct refrigeration of the food can be realised, especially also of the food in the trays from which the serving takes place.

The invention achieves one or more of the abovementioned objectives by providing a system in accordance with claim 1.

The cooling air supply device preferably includes a stationary located air cooler, for example installed stationary in a building, for example above a (lowered) ceiling.

The cooling air supply device includes mechanical means for the shifting of air, such as a ventilator.

The food trolley itself is preferably not equipped with a ventilator or any cooling device.

The food trolley is preferably of a simple design and not more than just a movable cabinet that can be moved on wheels with an open upper part (or opening therein) and facilities for supporting one or more food serving trays or wire baskets and the like, at which the cooling air opening(s) and the outlet(s) allow the refrigerated air flow realised by an external ventilator to pass. Of course the wheels can for example be of a type that can be locked in order to keep the trolley in its place. This "simple" version of the food trolley results in a low cost price, but is also advantageous in view of the desire (or requirement) to regularly clean such trolleys both on the inside and outside. This is preferably done with (hot) water under high pressure, if necessary in a special cleansing machine.

Preferably it is envisaged for the cooling air to enter the trolley at the lower side and to leave the trolley at the top side, close to the tray(s) or basket(s) in the serving position. As a result of that the cooling air can, against the natural movement of cold air, move upwards through and along the contents of the food trolley and therefore exert its cooling function.

With the provision of the air transfer opening "below in the trolley", as is preferred, is preferably intended "at the most at the height of the bottom of the tray that is placed lowest in the trolley", with special preference at the height of the bottom side of the trolley.

If the cooling air can escape upwards from the inner space of the trolley and if desired and advantageously also be directed over the upper tray(s), it is established in a reliable way that the food in that/those upper tray(s) can also be refrigerated properly. By consciously making use of the outflow of cooling air on the upper side of the trolley, a cooling function can be achieved in the upper part, and if possible as some sort of blanket on top of the food trolley; this is contrary to a solution in which the cooling air would not be able to escape from the inner space of the trolley. A small cooling airflow in practice turns out to be satisfactory, so that the loss of energy is limited.

An advantageous version is characterised by cooling air supply device being located outside of the room where the setup with one or more food trolleys is located. This also offers the advantage that the heat that is extracted from the cooling air does not end up in the room where the food trolley and therefore the food is located. In this respect the cooling air supply device can me mounted to the outside of the room, for example on the other side of a wall or on a roof, in a cellar, etc. The channel that can be linked with the food distribution trolley can in that case go through a wall, ceiling, floor, etc.

The cooling air that escapes from the trolley(s) will in principle also cool the room in which the trolley(s) and possibly the serving personnel are located. The air to be refrigerated can be supplied from the outside, but can also be taken from the room itself. The latter measure offers the option that this already contains pre-cooled air. In fact this is a more or less closed system. Of course it is preferred as the occasion arises to pretreat the air, meaning to dry, filter, etc. it if so desired.

The channel linked with the cooling air supply device can in principle contain any suitable connection between the cooling air supply device and the cooling air transfer opening of the food trolley. This regards, for example, a flexible hose, pipe, etc. This should preferably be insulated with a suitable material, such as foam or fibre material, etc. The hose can for example be connected by means of a quickly detachable coupler, swivel connection, etc. to the cooling air transfer opening of the food trolley. Any other essentially air-tight connection is possible as well though.

It is advantageous to provide a central cooling air supply device for one or more food trolleys. Not only can the trolleys be equipped more easily with fewer parts, but they can also be kept clean more easily, which is important for food applications, and the cooling air supply device can be used more efficiently. Not only is a single cooling air supply device for several trolleys cheaper because of a simpler execution, but the cooling efficiency is also better for one large device than for a number of small devices.

The supply device for cooling air can in principle contain any cooling element, such as a Peltier device, a humidifier, for example a block humidifier, etc.

The cooled air can be moved by mechanical means, such as one or more ventilators. Preferably the cooling air supply device can be controlled electronically. This can relate to the amount of cooling air, the speed of the cooling air, the temperature of the cooling air, combinations thereof, etc. For example a trolley that only contains one tray of food that, furthermore, does not have to be stored exceptionally cool, will need to receive less cooling air or less cold cooling air than, for example, a trolley with a large number of trays, for example with ice cream or other types of frozen food. The cooling air supply device for example contains electronically controllable ventilators and/or control valves that can direct the amount of air depending on that desired.

In a preferred embodiment the cooling air supply device is connected with multiple channels that can each be connected to a food trolley. This is one of the possible versions in which several trolleys are connected to a single cooling air supply device. This offers advantages with regard to the effectiveness of the cooling air supply device, as already described above. Preferably the channels can be closed off properly, so that a channel to which no food trolley is connected does not allow cooling air to escape. The number of channels, and therefore the number of trolleys to be connected, is not specifically limited and can for example amount to any number between two and ten, although a larger number is not ruled out. With such a number a large number of different meals can, however, already be prepared.

Another preferred version of the system in accordance with the invention is characterised by the food trolley having an additional transfer opening for cooling air, and the system contains an additional food trolley with a transfer opening for cooling air that can be connected to the additional cooling air opening of the food trolley. In this way several food trolleys can also be installed in a row and linked to one single connection of the cooling air supply device. An advantage of the latter version is that the number of channels, for example hoses, in the room remain limited, which enhances the freedom of movement for the serving personnel.

For the supply of cooling air to trolleys that are installed next to each other use could be made of a connection piece that is placed between two neighbouring trolleys and divides the airflow to both trolleys (or to rows of one or more trolleys). Such a connection piece could also be used for fixing the trolleys with regard to each other. Nevertheless the execution of the connection piece is in principle not limited to fixed systems, but could for example also contain an additional hose.

In a preferred embodiment the system contains one or more cooling air manifold trolleys, which on the one hand are connected to the cooling air supply device and on the other hand to one or more food trolleys installed next to it. Those trolleys should preferably be movable manually as well, to which preferably (lockable) wheels are fitted.

The use of one or more cooling air manifold trolleys has, for example, with regard to stationary installed manifold units for cooling air (which is also part of the invention) the advantage of a flexible arrangement, easier cleaning of the room and the manifold trolleys. Preferably, arrangements are made so that one or more cooling air manifold trolleys can be uncoupled from their supply hose or similar as well as be removed from their location, so that the room can then be used for other purposes.

With systems in accordance with the invention in which more food trolleys are connected to a single cooling air supply device, be it via a single channel or not, one or more sensors or indicators could be fitted in order to provide information on the number of connected food trolleys and if possibly on the contents thereof, for example the number of trays or the desired temperature inside the trolley. Based upon that, a control unit optionally provided in the cooling air supply device can control it accordingly.

The invention furthermore relates to a food trolley and a manifold trolley for cooling air, as well as a building with a room fitted with the system, as well as a method for the use of the system.

The invention will now be elaborated further by means of the drawing that shows some non-limiting versions and in which:
- Fig. 1 shows a schematic cross section of a system in accordance with the invention;
- Fig. 2 is a cross section of the frontal view of a food serving trolley in accordance with the invention;
- Fig. 3 shows a detailed side-view of a system in accordance with the invention;
- Fig. 4 shows the view from above of a system in accordance with the invention;
- Fig. 5 schematically shows a part of a preferred embodiment of the system in accordance with the invention;
- Figs. 6a-d shows the trolleys of the system of Figure 5 from various angles;
- Figs. 7a-c shows the parts of the alternative system of Figure 5 from various angles;
- Fig. 8 shows a part of the food serving trolley of the system;
- Fig. 9 shows a part of the cooling air supply device to be used in a system in accordance with the invention;
- Fig. 10 shows a view from above of an arrangement of a system in accordance with Figure 5;
- Fig. 11 shows a side-view of a system in accordance with the invention in a wall mounted arrangement; and
- Figs. 12a-d shows a trolley for wire baskets that can be included in the system, from various angles.

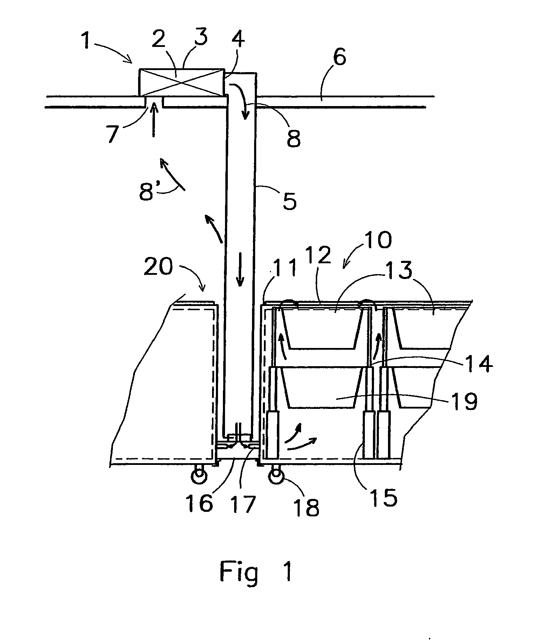

In Figure 1 the number 1 indicates an external, here stationary installed cooling air supply device, comprising a case 2 with an upper side 3 and an outlet for cooling air 4 that connects to a cooling air pipe 5 that goes through a ceiling 6. With the reference numeral 7 the suction opening for cooling air is indicated.

The cooling air supply device 1 maintains a flow of cooling air 8 and sucks up the air to be cooled 8'. The cooled air for example has a temperature just below freezing point, for example - 3 degrees.

The reference numeral 10 indicates the food serving trolley, comprising a housing 11 with an inner space limited by a floor and side walls, in which a mainly open upper part is present. Instead of an almost completely opened upper side the top of the housing could also be provided with an opening therein for allowing access to (a) serving tray(s) and/or wire baskets, to be explained further.

Next to the upper side of the housing 11 there are one or more outlets for cooling air 12 present, in this example mainly formed by gaps between and along a contour of a layer of one or more food serving trays 13 from which the food can be scooped from above.

In this example there are support means 15 that are adjustable in height in the trolley 10 that can so to speak push the trays upwards to a predefined (for example by means of a stop) serving position on the upper side of the inner space. Below the first trays 13 near the upper part of the housing a supply of one or more food distribution trays 19 is available here.

On the lower part of the trolley 10 there is a cooling air transfer opening 17 that is connected to a first in-between piece or connection piece 16, which in turn is connected to the air cooling pipe 5. A second food distribution trolley 20 is also connected to the first connection piece 16. In this way two or more trolleys can be connected to a single channel.

The cooling air supply device that is generally indicated with the reference numeral 1 is in principle not specifically limited as far as type and/or version are concerned. Each cooling air supply device which produces sufficient cooling capacity for the desired number of trolleys to be cooled, is suitable. Especially suited are cooling air supply devices that cause a large temperature drop to a relatively small volume of air. On average these are more efficient than cooling air supply devices that cause a small temperature change in a large volume of air. Nevertheless the latter devices can also be applied in the system in accordance with the invention.

The cooling air supply device is preferably fitted outside the room where the food trolleys 10, 20 are. In Fig. 1 this is indicated by the placement of the cooling air supply device 1 above a lowered ceiling 6 on the other side of where trolleys 10, 20 are located.

Preferably a cooling device is provided with a centrally located cooling aggregate, for example also for the cooling of the freezer, fridges, etc., belonging to the kitchen to which aggregate the air cooler with reference numeral 1 (for example containing a humidifier that is connected to the aggregate) is connected. This offers the advantage that the heat that is removed from the cooling air 8 by the device 1 does not end up as environmental heat in the aforementioned room. This is advantageous for the effectiveness of the system as a whole. In fact indirectly the room as a whole is cooled. Of course it is also possible to fit the cooling air supply device, possibly with corresponding aggregate, inside the mentioned room, for example on the other side of the ceiling 6. It is also possible to provide a mobile cooling air supply device 1; however, this, during use, will always be located in the same room and furthermore has to comply with other design requirements because of the desired mobility.

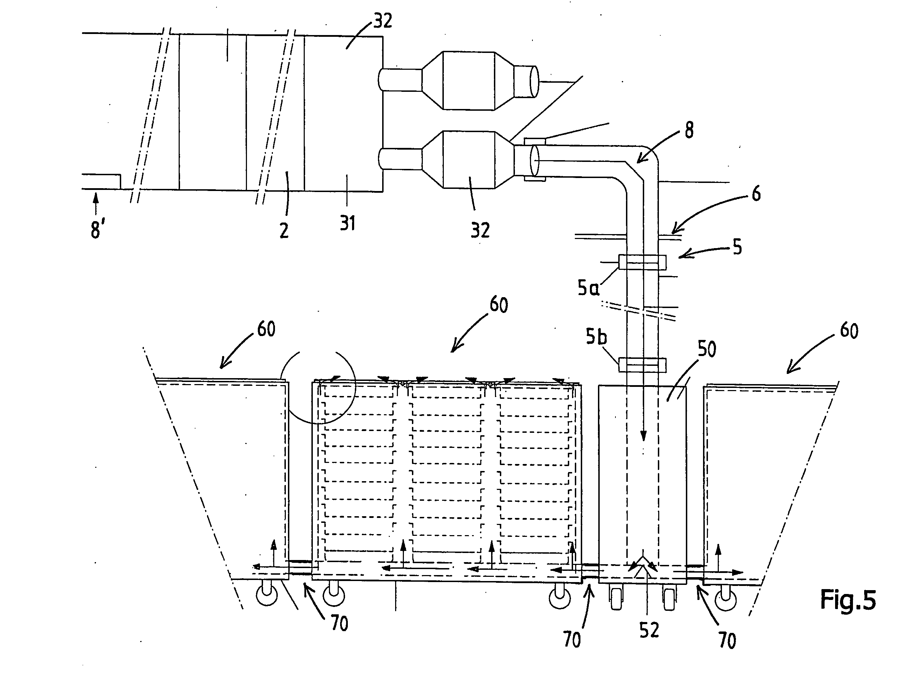

Figure 1 does not show the means for moving the cooling air, for example ventilators. These are not further explained here, but will be in the elaboration of Fig. 5. The cooled air 8 is vented via one or more outlet(s) for cooling air 4 to which in each case a cooling air pipe 5 is connected. The cooling air pipe 5 is preferably designed in an insulated version. To that end the air cooling pipe 5 is for example, provided in a double-walled version, and/or covered with a thermal insulation layer. The air cooling pipe 5 is connected to a first connecting part 16 that blows the cooling airflow 8 via outlets for cooling air 17 into the trolleys 10, 20. In the first trolley 10 for example the inflowing cooling air spreads itself through the food serving trolley and will escape under the influence of newly supplied cooling air via the outlet(s) for cooling air 12 on the upper side of the trolley 10. Herein all trays 13, 19 that are located in the trolley 10 are passed by the air, even those who are on top. Since the cooling air is exhausted upwards, the upper portion of the food that is located in the first trays 13 will also be passed by the air and therefore cooled.

The upper or first trays 13 are situated in a serving position from which the food can be scooped easily and transferred to meal trays.

The support means 15 to which the trays 13 and 19 can be fixed by means of fastening means 14 here realise the moving upwards of the trays located below when the upper trays are empty and are removed. These means 15 contain for example springs, gas springs, a pulley system, etc. If the trolley 10 is equipped with several trays on top of each other, as in the Figure the first trays 13 and the second trays 19, then the means 15 can be embodied in such a way that after taking out the first trays 13 the one or more underlying second trays 19 are automatically moved to the desired serving position height. For this purpose the height adjustment means 15 can for example be supplied with a spring system that is adapted to the (average) weight of the trays 13, 19. This system is in itself for example known from a system for storing, stacking and taking out plates. Herein a spring device is provided with a spring constant that is equal to the weight divided by the height of a plate. With some adjustments such a system can also be used in the present case. Of course other systems can be applied as well.

In Figure 1 can be seen that the flow of cooling air 8 escapes into the room after it went through the trolleys 10, 20. The air present here will finally be sucked in as air to be cooled 8' via the suction opening for cooling air 7 and subsequently be cooled once again in the device 1. With this the system for cooling air is closed. An open system, with supply from the outside, is possible as well of course.

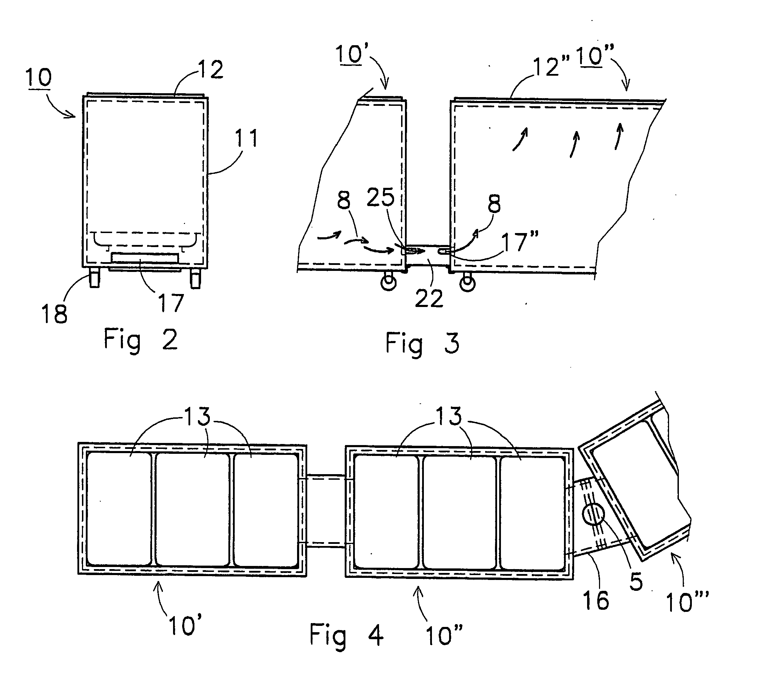

Figure 2 shows a trolley 10 in accordance with the invention. Here, as in the rest of the drawing, similar parts are indicated with the same reference numerals.

The housing 11 of the trolley 10 has one or more outlets for cooling air 12 at the upper side, and close to the lower side a cooling air transfer opening 17. With 18 wheels are indicated, although the trolleys can stand on the surface differently as well, for example with sliding stands.

It can be seen clearly that in principle the complete inner space of the trolley 10 is available for the trays with food (not displayed). The absence of active cooling means in the trolley 10 sees to it that these can be embodied fairly simple, whereas it is also very easy to clean these, especially because of the lack of additional parts.

The wheels 18 are only an example of means for transporting the trolley 10. They can be executed as swivelling rollers, balls, etc. Of course the wheels are only optional.

Figure 3 shows with 10' and 10" two food serving trolleys that are linked to a second connection part 22. This part 22 connects a first trolley 10' via a lower outlet for cooling air 21 with a second trolley 10" with a transfer opening for cooling air 17" . With this setup there are therefore two trolleys 10' and 10" that are not directly connected to an air cooling pipe 5, but are interlinked with each other via a second connecting part 22. For this purpose the one or more trolleys between trolley 10" and the air cooling pipe 5 should all be equipped with a lower or additional outlet opening for cooling air 21, so that via an appropriate number of second connecting parts 22 a connection between the air cooling pipe 5 and the trolley indicated as 10" in the drawing is achieved.

For that matter the trolley 10" does not have to be the last one in the row, and this row can in principle be extended without limit. Of course the cooling capacity of the air 8 will gradually diminish, partially because of heating up under way and partially because of the ever further division among the various trolleys. It is noted that this effect can partially also be used by choosing the order of the trolleys 10 in such a way that the food trolley containing the food that is best resistant to higher temperatures (for example in accordance with legal regulations) is set up at the end of such a chain. Furthermore it is noted that the cooling airflow 8 indicated in the Figure will escape less easily when the trolleys 10 are in operation, since the food serving trays that are present in the trolleys 10 will slow down a lot of the air, because of which more air 8 remains available in order to be blown into the next food trolley.

By means of the Figures 5-11 we will now elaborate on a preferred version of the system in accordance with the invention, as well as preferred versions of the food serving trolley and cooling air manifold trolley. Also an example of the cool air supply will be explained.

The system in Figure 5 comprises an cooling air supply device with a block humidifier 2 and with one or more channels 5 hanging from the ceiling 6 for cooling air. Arrangements have been made that the channel part hanging down can be detached in the vicinity of the ceiling via a coupling 5a. At the lower side the channel 5 is equipped with an easily uncoupled connector 5b. That coupling 5b is adapted to be connected to the cooling air manifold trolley 50 when the system is in operation. This trolley 50 has a cooling air inlet, here on the top, one or more cooling air outlets 51, here on both sides of the trolley 50. A regulation valve 52 in the trolley 50 makes it possible to regulate the airflow, for example by controlling the flow to each of the outlet openings and/or closing off one more of those openings 51 if no cooled trolley is placed there.

Via the trolley 50 the cooling air is divided among the food trolleys placed adjacent the trolley 50, here food serving trolleys 60 with a tray from which the food is scooped. Between the trolleys 50, 60 a detachable connector 70 is provided, which is constructed in such a way that by placing the trolley 60 next to the trolley 50, and the trolleys 60 next to each other, the coupling is automatically achieved, and is also automatically detachable here by removing one trolley 60 from said neighbouring arrangement. In this version there are therefore no additional coupling control activities necessary to be performed by the staff; it suffices to place the trolleys next to each other or to remove them respectively.

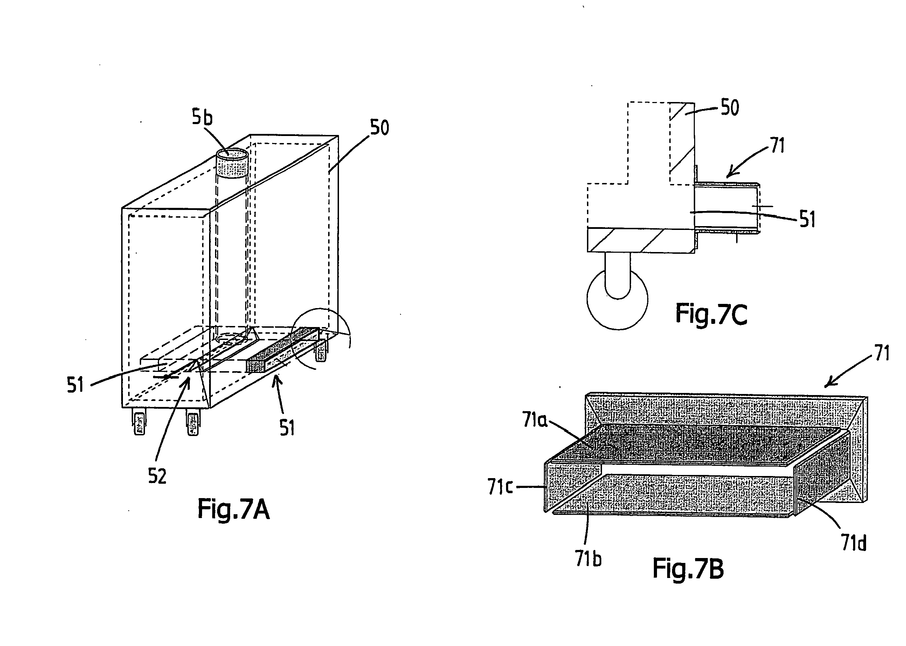

Such an automatic coupling 70 can be realised in various ways. A preferred embodiment will be elaborated by means of Figure 7. This version has a coupling sleeve 71 mounted on the trolley.

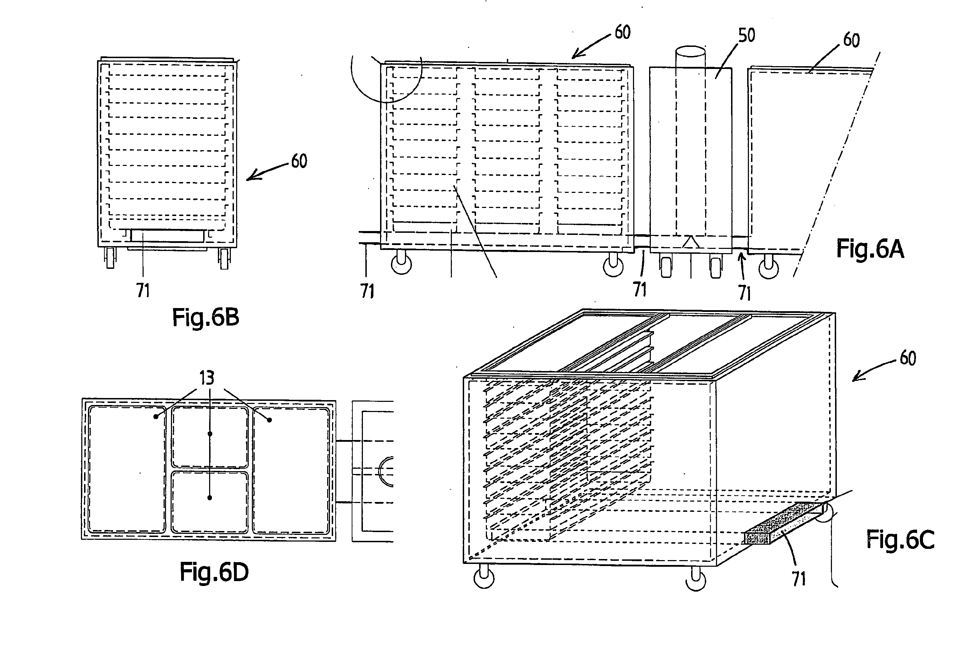

Figure 6 shows the trolley 60 with on both sides a coupling sleeve 71 close to the bottom of the trolley 60. The trolley 50 has been supplied with coupling sleeves 71 at the same height.

Figure 7b shows in detail the preferred embodiment of the coupling sleeve 71. This has an upper and a lower flap 71a, b, as well as two side flaps 71c, d, for example in a rectangular arrangement, in which the corners between the flaps are equipped with open joints and in which the flaps are movable, preferably manufactured from elastic material (preferably silicone), in such a way that by moving the coupling sleeves sideways and in the same line towards each other the flaps pass along each other and basically fit to each other and thus constitute a closed channel within the coupling.

The version of the coupling 70 is such, as is preferred, that the coupling only requires that the trolleys are placed next to each other, regardless of the approaching direction during the placement. For the removal of a trolley the same applies. In this way a trolley 60 can, for example when the trolley has become empty, be moved away from the arrangement and replaced by a new trolley. In this the other trolleys of the appliance do not have to be removed. Also, as is preferred, the coupling 70 does not have to be operated.

The flaps 71a-d can as far as their thickness is concerned be constructed tapered towards their free edge, for example 5mm thickness at the trolley wall to 1mm at the free end.

Here the flaps 71a-d are L-shaped, so that a leg of the flap can be fixed to the wall of the trolley.

If necessary a cap can be supplied in order to seal off the coupling sleeve 71 or a differently designed outlet opening 51 when it is not in use.

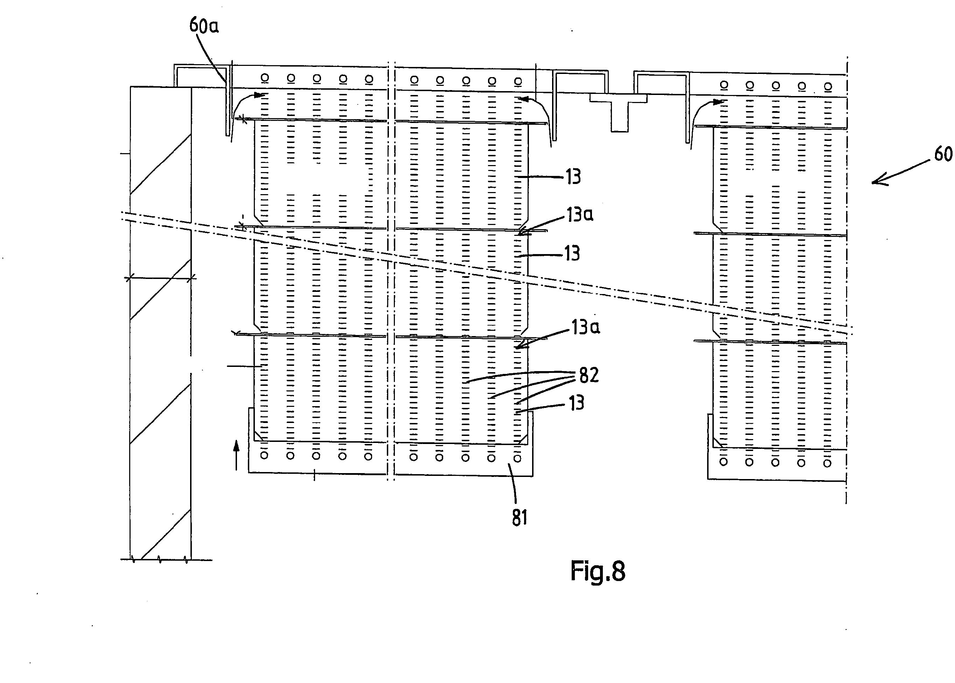

In Figure 8 in a vertical cross section a part of the trolley 60 is displayed. A spring support 80 can be seen for a stack of serving trays with a base support 81 for the stack and one or more spring elements 82 from which the base support 81 is suspended. The trays 13 are directly stacked on top of each other here, wherein each tray is closed on the upper side by a removable lid 13a. For serving the upper trays 13 are opened.

One can see that the trolley 60 has an contour rim 60a that is positioned higher than the upper side of the trays 13. Preferably this upper side of the contour rim is between 20 and 50 millimetres above the trays in serving position. Furthermore it can be seen that the cooling air flows through the gaps along the contour of the trays 13 and like a sort of cold blanket also keeps the food inside the upper trays cool. The flow over the upper trays is preferably very quiet, so that turbulence is prevented. Such turbulence causes mixing with the warm environment, which is undesirable.

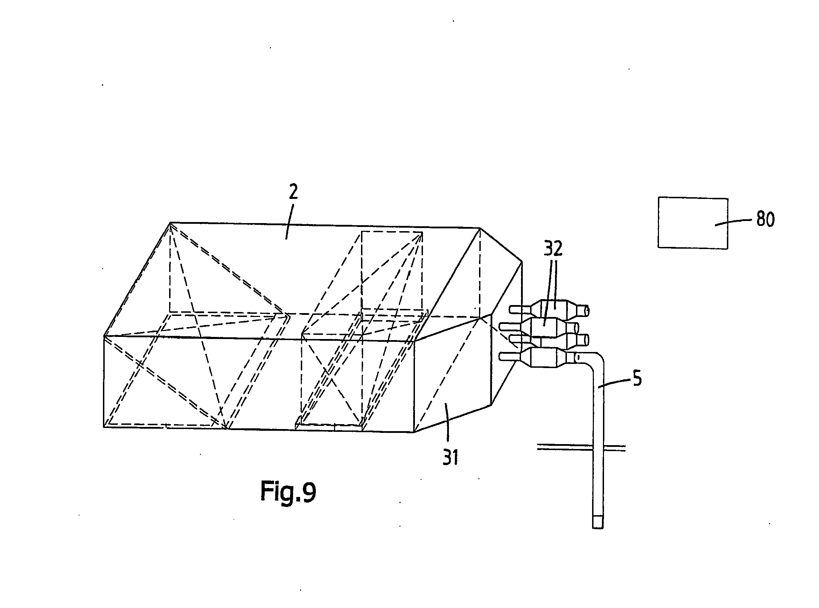

Figure 9 schematically shows the cooling air device with block humidifier 2 and inlet 8, and a manifold housing 31 with which the cooled air can be divided along a number of channels 5 with at each channel 5 a corresponding ventilator 32. This number is not specifically limited and can for example amount to 1, 2, etc. Preferably the (one or more) ventilator(s) 32 can be controlled electronically by means of a control unit 80. This control unit can for example control the flow rate of the cooling air, the temperature difference to be achieved, etc.

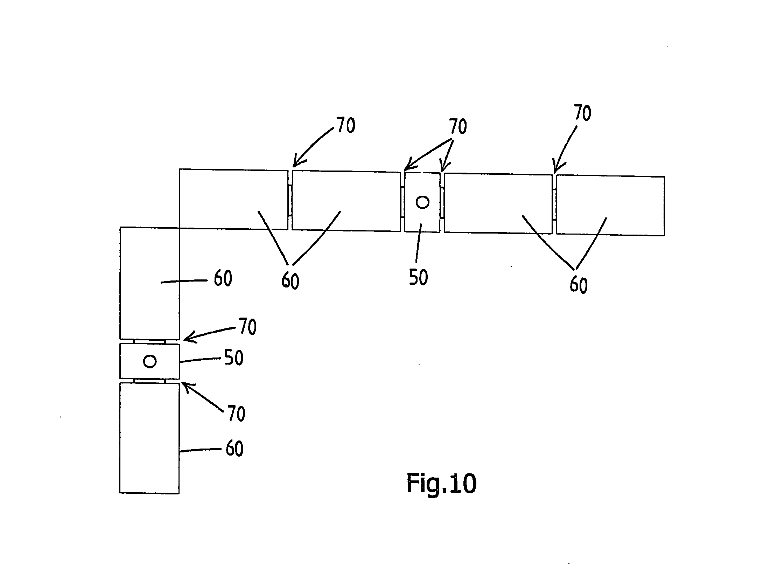

Figure 10 shows in a view from above a schematic arrangement of a system in accordance with the invention. Herein nine food trolleys are indicated with the reference numeral 10. The arrangement displayed here is one of the many options that can be achieved with the system in accordance with the invention. In this case the trays onto which the food should be distributed can be transported for example by means of one or more conveyor belts.

Of course other arrangements can be chosen as well, depending on the types of food to be distributed, the number of distributing personnel, etc.

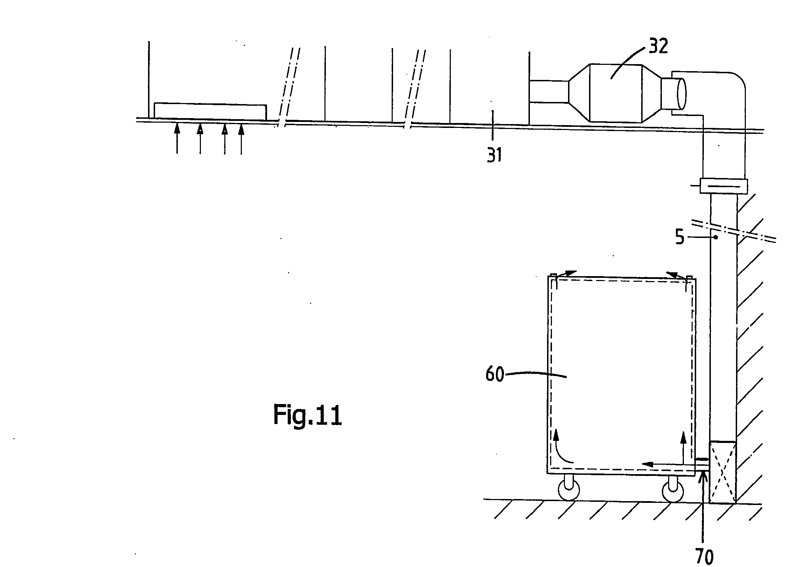

Figure 11 displays a wall mounted arrangement, wherein the trolleys 60 are placed along the wall. This can for example be the case in a storage room, where the trolleys 60 that are already filled with food are placed in expectation of the distribution. During this storage a cooling with cooling air is also provided for as mentioned earlier. The system makes it possible to keep freshly prepared food fresh for several days, if necessary even for three days. Of course the serving setup can also be made along a wall. If necessary in the storage setup one or more lids can be placed on the upper trays, in which it is preferred to maintain the outflow of cooling air at the upper side, for example by means of gaps along or in the lid(s).

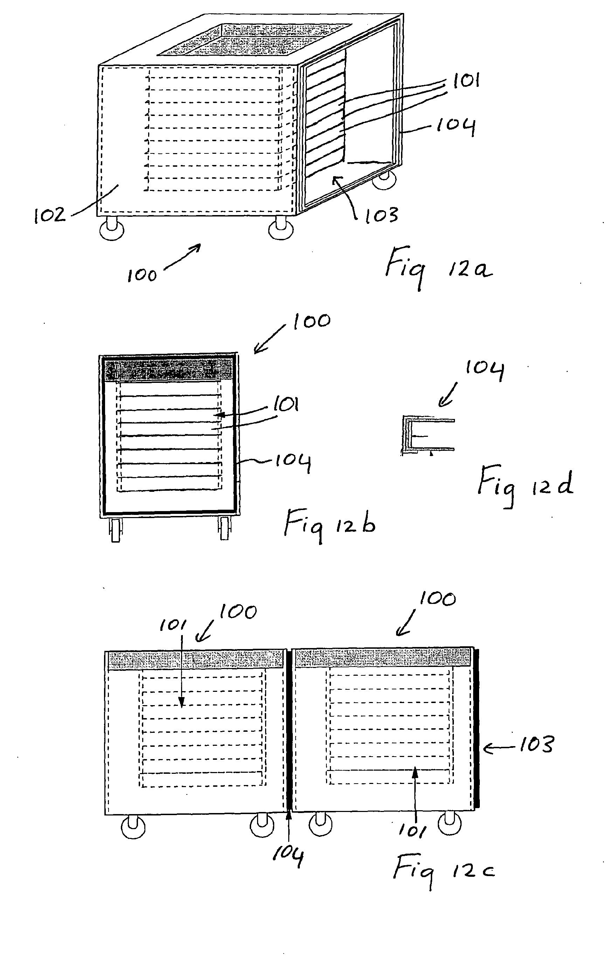

By means of the Figures 12a-d we will now elaborate on a trolley that can also be included in the system in accordance with the invention. The trolley 100 is equipped to receive wire baskets 101 or the like in a vertical stack. The trolley 100 has an opening at the upper side so that those wire baskets can be placed into and taken from the trolley 100. Not shown here are the support means, which are known, for the wire baskets 101, which see to it that the upper wire basket is kept at the desired height. In such wire baskets in practice for example soups, deserts and the like are positioned. During the distribution a bowl can then be taken from the basket and placed onto the meal tray. The cooling air supplied to the trolley rises through the wire baskets and flows out of the trolley 100 at the opening on the upper side.

The trolley 100 has two closed sides 102 that are opposite of each other and at one or two other sides a transfer opening for cooling air 103, here formed by the completely open side of the trolley. Around that opening 103 a coupling part 104 has been mounted, here as a flexible sealing ring. In Figure 12d a cross section is shown by means of an example of the coupling part 104 with along each edge of the opening at least one, here two neighbouring flexible flaps, for example made of silicone. When two trolleys 100 are placed next to each other or against an air manifold trolley adjusted to that, a suitable sealing is achieved. Preferable arrangements are made here as well that a trolley 100 can be taken out of the row and replaced by a full trolley 100.

As Figure 12c indicates such trolleys 100 can be placed against each other. Furthermore a trolley 100 can be equipped with a closed side opposed to the side with an opening 103.

It will be clear that when applying the trolley 100 the cooling air manifold trolley that might be used will also be adjusted to that. The inflow of cooling air (as well as the cooling air supply device to be used) is tuned to the application of the trolley 100.

The invention has been explained by means of some embodiments. These should be explained in a non-limiting way.

## Claims

1. System for the refrigerated storage and serving or distribution of food with one or more refrigerated food trolleys (10, 20; 10', 10", 10"'; 100), said system comprising:
- a cooling air supply device (1) for providing a flow of cooling air (8, 8');
- a food trolley (10, 20; 10', 10", 10'''; 100) with an inner space for receiving therein one or more trays (13, 19) with food to be served and/or wire baskets (101) with therein food containers to be distributed, which food trolley has an opening at the upper side, wherein the trolley can support one or more trays or wire baskets in a serving position in the upper part of the inner space at that opening, in such a way that food can be ladled from said one or more trays or a food container can be taken from the wire basket from above, wherein preferably in the inner space support means are mounted in which below the serving position a store of several filled trays or baskets can be received,
- wherein the food trolley is provided with a cooling air transfer opening (17; 71) for the supply of cooling air to the inner space,
- wherein a detachable coupling is associated with the cooling air transfer opening for the detachable connection of the cooling air supply device to the food trolley,
- wherein the food trolley is furthermore provided with at least one outlet opening for cooling air via which cooling air can flow from the inner space,
- wherein the coolin air outlet opening is preferably located higher than the cooling air transfer opening, so that in the inner space a flow, preferably upwards, of cooling air takes place during the operation of the system, preferably at least during the serving or distribution.

2. System according to claim 1, wherein one or more cooling air outlet openings air are located at the height of the upper side of the one or more trays or wire baskets in the serving position, and wherein one or more cooling air outlet openings are preferably constituted by one or more gaps along the outer contour of said one or more of the trays in the serving position.

3. System according to one or more of the preceding claims, wherein the food trolley has a heightened contour rim compared to the upper side of the one or more trays or wire baskets in the serving position, wherein the one or more cooling air outlet openings are between and around the trays in serving position, and wherein the upper side of the contour rim preferably protrudes 20 to 50 millimetres above the trays or wire baskets in serving position.

4. System according to one or more of the preceding claims, wherein the cooling air supply device includes an air cooler for the cooling of supplied air, as well as one or more air channels connected to the air cooler, which channels are each detachably connectable to the one or more food trolleys.

5. System according to claim 4, wherein the cooling air supply device includes one or more ventilators, preferably per cooling air channel a separate ventilator, for the regulation of the debit of the cooling air, preferably electronically controllable ventilators, for example tubular ventilators.

6. System according to one or more of the preceding claims, wherein the cooling air supply device (1) comprises one or more cooling air channels which are installed in a room where the food is distributed or served from the food trolley, for example from a ceiling or another construction above the head aimed downwards and/or along a wall of the room concerned, wherein the one or more food trolleys can be coupled to and detached from the one or more cooling air channels, and wherein preferably an air cooler is installed in a location above the head, preferably above a (lowered) ceiling.

7. System according to one or more of the preceding claims, wherein the system furthermore comprises one or more cooling air manifold trolleys (50), which are each connected to the cooling air supply device via a corresponding cooling air channel, and wherein each cooling air manifold trolley is provided with at least one cooling air outlet opening that can be connected with a detachable coupling to a cooling air transfer opening of a food trolley placed next to the cooling air manifold trolley.

8. System according to claim 7, wherein the coupling is constructed in such a way that by placing the food trolley next to the cooling air manifold trolley the coupling is realised automatically, and preferably can also be automatically detached by removing the food trolley from that neighbouring setup, and wherein a cooling air manifold trolley has, possibly, an outlet opening for cooling air on several sides, for example on both sides, so that several food trolleys can be set up adjacent a single cooling air manifold trolley.

9. System according to one or more of the preceding claims, wherein a food trolley has an additional cooling air transfer opening (21), so that a next food trolley (10') can be coupled with that additional cooling air transfer opening.

10. System according to one or more of the preceding claims, wherein the detachable coupling comprises a coupling sleeve (71) at each of the parts to be coupled, wherein each coupling sleeve has an upper and lower flap as well as two side-flaps, for example in a rectangular arrangement, wherein the corners between the flaps are open joints and wherein the flaps are flexible, preferably made of elastic material, in such a way that by moving the coupling sleeves sideways and in line towards each other, the flaps pass along each other and essentially connect to each other and thus constitute an essentially closed channel within the coupling.

11. System according to one or more of the preceding claims, wherein a food trolley has a spring support (80) for a stack of serving trays or wire baskets with a base support for the stack as well as one or more spring elements from which the base support is suspended.

12. Food trolley (10, 20; 10', 10'', 10'''; 60), preferably for a system according to one or more of the preceding claims, with an inner space for receiving therein one or more trays (13, 19) with food to be served or wire baskets with therein food containers to be distributed, which trolley has an opening at the upper side, wherein the trolley can support one or more trays or wire baskets in a serving position in the upper part of the inner space at that opening, in such a way that food can be ladled from one or more trays or a food container can be taken from the wire basket from above, wherein preferably in the inner space support means are mounted in which below the serving position a storage of several filled trays or baskets can be received,
- wherein the food trolley is provided with a cooling air transfer opening (17) for the supply of cooling air to the inner space,
- wherein a detachable coupling is associated with the cooling air transfer opening for the detachable connection of the cooling air supply device to the food trolley,
- wherein the food trolley is furthermore provided with at least one cooling air outlet opening (17) via which the cooling air can flow from the inner space, so that inside the inner space an upward flow of cooling air takes place during the operation of the system, preferably at least during the distribution or serving.

13. Cooling air manifold trolley (50), preferably for a system in accordance with one or more of the preceding claims, that can be connected to an external cooling air supply device via a corresponding cooling air channel, and wherein the cooling air manifold trolley is provided with at least one cooling air outlet opening that can be connected by means of a detachable coupling to a cooling air transfer opening of a food trolley to be placed next to the cooling air manifold trolley.

14. Food trolley according to claim 12 and/or cooling air manifold trolley according to claim 13, wherein the detachable coupling includes a coupling sleeve (71) on the trolley, in which the coupling sleeve has an upper and a lower flap as well as two side-flaps, wherein the corners between the flaps are open joints and wherein the flaps are flexible, preferably made of elastic material, in such a way that by moving the coupling sleeves sideways and in line towards each other, the flaps pass along each other and essentially connect to each other and thus constitute an essentially closed channel within the coupling.

15. Building equipped with a system according to one or more of the preceding claims, for example in which the cooling air supply device comprises an air cooler for cooling the supplied air which is preferably positioned above a (lowered) ceiling, wherein one or more cooling air channels that are aimed downwards from the ceiling are connected to the air cooler, in which a cooling air manifold trolley is connected to a cooling air channel, the cooling air manifold trolley being provided with an outlet opening for cooling air on several sides, wherein the system comprises several food trolleys, so that along the various sides of the cooling air manifold trolley in each case a food trolley can be placed, in which the coupling is preferably constructed in such a way that it is realised automatically by placing a food trolley next to the cooling air manifold trolley, and can preferably be detached automatically by removing the food trolley from that neighbouring setup.

16. Method for the serving or distribution of refrigerated food wherein use is made of a system in accordance with one or more of the preceding claims.
